# EUROPEAN PATENT APPLICATION

(11) **EP 4 847 538 A1**
(43) Date of publication of application: **02.12.2026**
(21) Application number: 25305759.0
(22) Date of filing: 27.05.2025
(51) Int. Cl.: C08F 4/38, C08F 220/14, C08K 5/14

(54) **COMPOSITION COMPRISING AT LEAST TWO ORGANIC PEROXIDES FOR THE POLYMERIZATION OF ACRYLIC MONOMERS**

(71) Applicant: ARKEMA France, 92800 Puteaux (FR)
(72) Inventor: YU, Xiaoqian, Changshu, 215522 (CN)
(74) Representative: Arkema Patent

(57) **Abstract**

The present invention relates to a composition comprising a first organic peroxide having a one-hour half-life temperature comprised between 40°C and less than 80°C and a second organic peroxide having a one-hour half-life temperature comprised between 80°C and less than 110°C.

The invention also concerns the use of such a composition for the polymerization of a composition comprising at least one (meth)acrylic monomer and optionally at least one (meth)acrylic polymer.

Finally, the invention namely deals with a polymerization process, and also to the articles obtainable by said process.

## Description

The present invention relates to a composition comprising a first organic peroxide having a one-hour half-life temperature comprised between 50°C and less than 80°C and a second organic peroxide having a one-hour half-life temperature comprised between 80°C and less than 110°C.

The invention also concerns the use of such a composition as initiator for the polymerization of a composition comprising at least one acrylic monomer and optionally at least one acrylic polymer (in particular an acrylic copolymer).

Finally, the invention namely deals with a process for preparing a polymerized composition, and also to the articles obtainable by said process.

(Meth)acrylic resins are often used for making molded or cast objects, with or without filler, and also composites. The composition containing the mixture of (meth)acrylic monomers and optionally of (meth)acrylic polymers in the presence of polymerization initiators may be poured into a mold and then polymerized and hardened during a more or less gradual temperature increase. As a variant, the composition may just as well be poured between two molds, so as to recover, after polymerization, the corresponding resin. The polymerization is conventionally performed using radical initiators such as azo compounds, or alternatively organic peroxides. Azo initiators, of which the most common, AIBN, is solid, have evolutions of nitrogen which may be undesirable in films or transparent plates and are liable to release highly toxic decomposition products. Furthermore, they must be stored at a controlled temperature.

Moreover, organic peroxides, which are regularly used as polymerization initiators, are mainly solid organic peroxides. For instance, solid peroxydicarbonates are often used to obtain higher initiation efficiency. Said solid intiators have the drawback of being poorly soluble in acrylic monomers and lead to products whose mechanical properties are deemed to be too poor. Furthermore, when organic peroxides mixtures are used, said organic peroxides are not always compatible, and their dispersions in the resins may be difficult. Consequently, it may be necessary to add them separately in the resin.

Thus, one of the aims of the present invention is to overcome the abovementioned drawbacks, that is to say to replace the organic peroxides commonly used during the radical polymerization of acrylic monomers with other polymerization initiators which show good compatibility with the resin - thus reducing the mixing time and avoiding the curing issues caused by uneven dispersion of the initiators - and can be used as a mixture of organic peroxides, which makes the process easier and avoids a repeated weighting of the organic peroxides.

In other words, there is a real need to propose other polymerization initiators which have good compatibility in the resins while still having fast polymerization and low residual monomer content.

The present invention relates to a composition comprising:
- from more than 40% to 80% by weight relative to the total weight of the organic peroxides, of a first organic peroxide having a one hour half-life temperature comprised between 50°C and less than 80°C, more preferably comprised between 54°C and 77°C and even more preferably comprised between 60°C and 70°C, the first organic peroxide being a peroxyester according to formula (I): 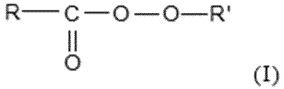 wherein R and R' are the same or different and are selected from a linear or branched C₄-C₂₀ alkyl radical; and
- a second organic peroxide having a one-hour half-life temperature comprised between 80°C and less 110°C, preferably comprised between 85°C and 105°C, more preferably comprised between 88°C and 100°C and even more preferably comprised between 90°C and 95°C.

Preferably, the composition according to the invention is liquid at ambient temperature.

Other subjects and characteristics, aspects and advantages of the invention will emerge even more clearly on reading the description and the example that follows.

In the text herein below, and unless otherwise indicated, the limits of a range of values are included in that range, in particular in the expressions "between" and "ranging from ... to ... ".

Moreover, the expression "at least one" used in the present description is equivalent to the expression "one or more".

In the text herein below, the terms "perester" and "peroxyester" are equivalent.

### Composition (organic peroxide composition)

The composition of the present invention comprises at least two organic peroxides having:
- a one-hour half-life temperature comprised between 50°C and less than 80°C, more preferably comprised between 54°C and 77°C and even more preferably comprised between 60°C and 70°C, and
- a one-hour half-life temperature comprised between 80°C and less than 110°C, more preferably comprised between 85°C and 105°C, more preferably comprised between 88°C and 100°C respectively and even more preferably comprised between 90°C and 95°C.

The "one hour half-life temperature" is the temperature at which half of the peroxide has decomposed in one hour. In other words, it is the temperature at which a loss of one-half of the peroxide's active oxygen content occurs after 1 hour.

Classically, the half-life temperature at 1 hour of the organic peroxides is determined by measuring the decomposition rate in n-decane or n-dodecane, preferably in n-decane.

Preferably, the composition is liquid at room temperature, e.g. at temperature ranging from 5°C to 30°C.

A liquid composition of organic peroxides permits to accelerate the mixing of the said composition with the polymerizable composition.

The first organic peroxide having a one-hour half-life temperature comprised between 50°C and less than 80°C, is a peroxyester according to formula (I): 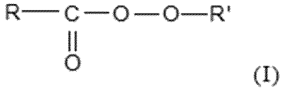 wherein R and R' are the same or different and are selected from a linear or branched C₄-C₂₀ alkyl radical.

In other words, R and R' may represent, independently of each other, a linear or branched C₄-C₂₀ alkyl radical.

Especially, R and R' may represent, independently of each other, a linear or branched C₄-C₂₀ alkyl radical wherein R contains a higher number of carbon atoms than R'.

Preferably, R and R' represent, independently of each other, a branched C₄-C₂₀ alkyl radical.

Advantageously, R represents a branched C₄-C₁₀ alkyl radical, preferably C₇-C₉ alkyl radical and R' represents a branched C₄-C₉ alkyl radical, preferably C₄-C₅ alkyl radical.

More preferably, R represents a branched C₆-C₈ alkyl radical, more preferably a C₇ alkyl radical and R' represents a branched C₄-C₅ alkyl radical.

According to a preferred embodiment, R represents a branched C₉ alkyl radical and R' represents a branched C₄ alkyl radical.

Preferably, the first organic peroxide is selected from the group consisting of 1,1,3,3-tetramethylbutylperoxyneodecanoate (sold under the name Luperox^{®} 810), tert-amylperoxyneodecanoate (sold under the name Luperox^{®} 546), tert-butylperoxyneodecanoate (sold under the name Luperox^{®} 10), 1,1,3,3-tetramethylbutylperoxypivalate, tert-butylperoxyneoheptanoate (sold under the name Luperox^{®} 701), tert-amylperoxypivalate (sold under the name Luperox^{®} 554), tert-butylperoxypivalate (sold under the name Luperox^{®} 11), α-cumyl peroxyneodecanoate (sold under the name Luperox^{®} 188), di-2-ethylhexyl peroxydicarbonate (sold under the name Luperox^{®} 223), diisopropyl peroxydicarbonate (sold under the name Luperox^{®} IPP27) and mixtures thereof, more preferably, the first organic peroxide is at least one tert-butylperoxyneodecanoate.

The first organic peroxide is present in an amount ranging from more than 40% to 80% by weight, preferably from 41 to 60% by weight, more preferably from 42 to 55% by weight relative to the total weight of organic peroxides.

In the meaning of the present invention, the "weight of organic peroxide" means the weight of organic peroxide without any diluent.

Preferably, the second organic peroxide having a one-hour half-life temperature comprised between 85°C and less than 110°C is a peroxyester, preferably a peroxyester according to formula (II): 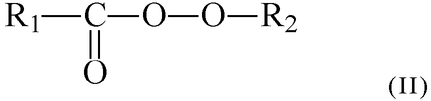 wherein R₁ and R₂ are the same or different and are selected from a linear or branched C₄-C₂₀ alkyl radical.

In other words, R₁ and R₂ may represent, independently of each other, a linear or branched C₄-C₂₀ alkyl radical.

Especially, R₁ and R₂ may represent, independently of each other, a linear or branched C₄-C₂₀ alkyl radical wherein R contains a higher number of carbon atoms than R₂.

Preferably, R₁ and R₂ represent, independently of each other, a branched C₄-C₂₀ alkyl radical.

Advantageously, R₁ represents a branched C₄-C₁₀ alkyl radical, preferably C₆-C₈ alkyl radical and R₂ represents a branched C₄-C₉ alkyl radical, preferably a branched C₄-C₅ alkyl radical, even preferably a branched C₅ alkyl radical.

More preferably, R₁ represents a branched C₆-C₈ alkyl radical, more preferably a C₇ alkyl radical and R₂ represents a branched C₄-C₅ alkyl radical.

According to a preferred embodiment, R₁ represents a branched C₇ alkyl radical and R₂ represents a branched C₅ alkyl radical.

Especially, the second organic peroxide may be selected from the group consisting of 1,1,3,3-tetramethylbutylperoxy-2-ethylhexanoate (sold under the name Luperox^{®} 826), tert-amylperoxy-2-ethylhexanoate (sold under the name Luperox^{®} 575), tert-butylperoxy-2-ethylhexanoate (sold under the name Luperox 26^{®}), tert-butylperoxydiethylacetate, tert-butylperoxyisobutyrate (sold under the name Luperox^{®} 80), tert-amylperoxy -3,5,5-trimethylhexanoate (sold under the name Luperox^{®} 570) and mixtures thereof, preferably is selected in the group consisting of tert-amyl peroxy-2-ethylhexanoate, tert-butyl peroxy-2-ethylhexanoate and mixtures thereof. More preferably, the second organic peroxide is at least one tert-amyl peroxy-2-ethylhexanoate.

Preferably the weight ratio between the first organic peroxide and the second organic peroxide, especially between tert-butylperoxyneodecanoate and tert-amylperoxy-2-ethylhexanoate ranges from 2:3 to 4:1, preferably from 2:3 to 2:1, more preferably from 7:10 to 20:11.

Preferably, the first organic peroxide is tert-butylperoxyneodecanoate and the second organic peroxide is tert-amyl peroxy-2-ethylhexanoate.

The composition of the present invention may also comprise a third organic peroxide having a one-hour half-life temperature comprised between 110°C and 135°C, preferably comprised between 111°C and 125°C.

Preferably, the third organic peroxide is selected from the group consisting of: monoperoxycarbonates and peroxyketals, preferably from the group consisting of: OO-tert-butyl-O-(2-ethylhexyl)-monoperoxycarbonate (sold under the name Luperox^{®} TBEC), le OO-tert-amyl-O-(2-ethylhexyl)-monoperoxycarbonate (sold under the name Luperox^{®} TAEC), 1,1-di(tert-butylperoxy)-3,3,5-trimethylcyclohexane (sold under the name Luperox^{®} 231), 1,1-di(tert-butylperoxy)-cyclohexane (sold under the name Luperox^{®} 331), 1,1-di(tert-amyl peroxy)-cyclohexane (sold under the name Luperox^{®} 531), and mixtures thereof.

Preferably, the second organic peroxide, or the total of the second and third organic peroxides when a third organic peroxide is present, represents from 20 to less than 60% by weight, preferably from 40 to 59% by weight, even more preferably from 45% to 58% by weight relative to the total weight of organic peroxides.

In other words, when the third organic peroxide is not present, the second organic peroxide represents from 20% to less than 60% by weight, preferably from 40% to 59% by weight, even more preferably from 45% to 58% by weight relative to the total weight of organic peroxides; when the third organic peroxide is present the total amount of the second and the third organic peroxides represents from 20% to less than 60% by weight, preferably from 40% to 59% by weight, even more preferably from 45% to 58% by weight relative to the total weight of organic peroxides.

Preferably, the weight ratio between the second organic peroxide and the third organic peroxide ranges from 1:2 to 2:1, preferably from 3:4 to 3:2.

Preferably, the third organic peroxide is present in an amount ranging from 10% to 40% by weight, preferably from 15% to 38% by weight, relative to the total weight of organic peroxides.

In a preferred embodiment, the composition comprises:
- from more than 40% to 80% by weight, preferably 41% to 60% by weight, more preferably 42% to 55% by weight relative to the total weight of organic peroxides, of the first organic peroxide as defined above; and
- from 20% to less than 60% by weight, preferably from 40% to 59% by weight, more preferably 45% to 58% by weight relative to the total weight of organic peroxides, of the second organic peroxide; and
- no third organic peroxides.

In a particularly preferred embodiment, the composition comprises:
- from more than 40% to 80% by weight, preferably 41% to 60% by weight, more preferably 42% to 55% by weight relative to the total weight of organic peroxides, of the first organic peroxide as defined above;
- from 10% to less than 40% by weight, preferably from 15% to 38% by weight, more preferably from 20% to 35% by weight relative to the total weight of organic peroxides, of the second organic peroxide as defined above; and
- 10% to 40% by weight, preferably from 15% to 38% by weight, more preferably from 20% to 35% by weight relative to the total weight of organic peroxides, of the third organic peroxides as defined above.

Preferably, the composition comprises less than 20% by weight of additive(s) relative to the weight of the composition, more preferably less than 10% by weight of additive relative to the weight of the composition.

According to an embodiment, the composition does not contain any additional additives, meaning that it consists of the two organic peroxides or three organic peroxides of as previously defined.

### Polymerizable composition

The present invention also pertains to a polymerizable composition comprising at least one (meth)acrylic monomer and optionally at least one (meth)acrylic polymer, and at least one composition (organic peroxide composition) as defined above.

Preferably, when the polymerizable composition contains no fillers, it is in liquid form at room temperature. This composition is generally referred to as a "syrup" or "prepolymer".

### (Meth)acrylic monomers

For the purposes of the present invention, the term "monomer" means a molecule which can undergo polymerization.

For the purposes of the present invention, the term "at least one monomer" means that at least one monomer chemical species is present. In other words, the composition according to the invention comprises at least one (meth)acrylic monomer chemical species that is capable of polymerizing. Preferably, the at least one (meth)acrylic monomer is chosen from the group consisting of acrylic acid, methacrylic acid, alkyl acrylic monomers, alkyl methacrylic monomers, hydroxyalkyl acrylic monomers and hydroxyalkyl methacrylic monomers, and mixtures thereof.

More preferentially, the at least one (meth)acrylic monomer is chosen from the group consisting of acrylic acid, methacrylic acid, alkyl acrylic monomers, alkyl methacrylic monomers, hydroxyalkyl acrylic monomers and hydroxyalkyl methacrylic monomers and mixtures thereof, the alkyl group containing from 1 to 22 linear, branched or cyclic carbons, preferably 1 to 12 linear, branched or cyclic carbons.

Advantageously, the at least one (meth)acrylic monomer is chosen from the group consisting of methyl methacrylate, ethyl methacrylate, methyl acrylate, ethyl acrylate, methacrylic acid, acrylic acid, n-butyl acrylate, isobutyl acrylate, n-butyl methacrylate, isobutyl methacrylate, cyclohexyl acrylate, cyclohexyl methacrylate, isobornyl acrylate, isobornyl methacrylate, hydroxyethyl acrylate and hydroxyethyl methacrylate, and mixtures thereof.

Preferably, at least 50% by weight, preferably at least 60% by weight, preferably at least 70% by weight, advantageously at least 80% by weight and even more advantageously 90% by weight of the (meth)acrylic monomer is methyl methacrylate.

Preferably, the (meth)acrylic monomer is methyl methacrylate.

Preferably, the at least one (meth)acrylic monomer represents between 40% and 90% by weight, preferably between 45% and 85% by weight of the composition.

Advantageously, the composition according to the present invention comprises at least a second monomer comprising at least two (meth)acrylic functions.

Such monomers make it possible to obtain a thermosetting meth(acrylic) resin.

Preferably, said at least one second monomer represents between 0.01 and 10 phr, preferably between 0.1 and 5 phr by weight relative to the sum of the (meth)acrylic monomer and of the optional (meth)acrylic polymer.

Preferably, said second (meth)acrylic monomer is chosen from the group consisting of ethylene glycol dimethacrylate, neopentyl glycol diacrylate, neopentyl glycol dimethacrylate, 1,4-butanediol dimethacrylate, 1,4-butanediol diacrylate, 1,3-butylene glycol diacrylate, 1,3-butylene glycol dimethacrylate and a mixture thereof.

### (Meth)acrylic polymer

The polymerizable composition according to the present invention may comprise at least one (meth)acrylic polymer, in particular a (meth)acrylic copolymer, preferably chosen from the group consisting of polyalkyl acrylates or polyalkyl methacrylates. Preferably, the (meth)acrylic polymer is poly(methyl methacrylate) (PMMA).

The term "PMMA" denotes a methyl methacrylate (MMA) homopolymer or copolymer or mixtures thereof.

Preferably, the methyl methacrylate (MMA) homo- or copolymer comprises at least 50%, preferably at least 70%, preferably at least 80%, advantageously at least 90% and more advantageously at least 95% by weight of methyl methacrylate.

Preferably, the PMMA is a mixture of at least one homopolymer and at least one copolymer of MMA, or a mixture of at least two homopolymers or two copolymers of MMA with a different average molecular weight or a mixture of at least two copolymers of MMA with a different monomer composition.

Preferably, the methyl methacrylate (MMA) copolymer comprises from 70% to 99.7% by weight of methyl methacrylate and from 0.3% to 30% by weight of at least one monomer containing at least one ethylenic unsaturation which may be copolymerized with methyl methacrylate.

These monomers are well known and mention may be made notably of acrylic and methacrylic acids and alkyl(meth)acrylates in which the alkyl group contains from 1 to 12 carbon atoms. As examples, mention may be made of methyl acrylate and ethyl, butyl or 2-ethylhexyl (meth)acrylate. Preferably, the comonomer is an alkyl acrylate in which the alkyl group contains from 1 to 4 carbon atoms.

Preferably, the methyl methacrylate (MMA) polymer comprises at least 80%, preferably at least 90%, advantageously at least 95% by weight of methyl methacrylate.

According to a preferred embodiment, the methyl methacrylate (MMA) copolymer comprises from 80% to 99.7%, advantageously from 90% to 99.7% and more advantageously from 90% to 99.5% by weight of methyl methacrylate and from 0.3% to 20%, advantageously from 0.3% to 10% and more advantageously from 0.5% to 10% by weight of at least one monomer, containing at least one ethylenic unsaturation, which may be copolymerized with the methyl methacrylate. Preferably, the comonomer is chosen from methyl acrylate and ethyl acrylate, and mixtures thereof.

Preferably, the average molecular weight of the (meth)acrylic polymer is greater than 50 000 g/mol and preferably greater than 100 000 g/mol.

The average molecular weight may be measured by exclusion chromatography (SEC).

Preferably, the (meth)acrylic polymer is completely soluble in the composition. This makes it possible to increase the viscosity of the composition.

Preferably, the at least one (meth)acrylic polymer represents at least 0.5% by weight, preferably at least 1% by weight, and advantageously at least 1.5% by weight of the composition.

Preferably, the at least one (meth)acrylic polymer represents less than 50% by weight, preferably less than 40%, preferably less than 10% and advantageously less than 5% by weight of the composition.

The addition of said at least one (meth)acrylic polymer to the composition of the present invention makes it possible to obtain a suitable dynamic viscosity for the composition. This dynamic viscosity makes it possible to retain the thermoplastic properties of the matrix obtained after polymerization and, where appropriate, good impregnation of the fibrous substrate.

### Stabilizers

The composition of the present invention may also comprise stabilizers (also known as reaction inhibitors). These stabilizers can prevent spontaneous polymerization of said at least one (meth)acrylic monomer.

These stabilizers may notably be chosen from hydroquinone (HQ), hydroquinone monomethyl ether (HQME), 2,6-di-tert-butyl-4-methylphenol (BHT), 2,6-di-tert-butyl-4-methoxyphenol (Topanol O) and 2,4-dimethyl-6-tert-butylphenol (Topanol A).

Preferably, these stabilizers represent less than 5 parts by weight, advantageously less than 4 parts by weight and preferentially between 0.3 and 3 parts by weight, per 100 parts by weight of the at least one (meth)acrylic monomer and of the optional at least one (meth)acrylic polymer.

### Mineral filler

The (meth)acrylic composition according to the invention may also comprise up to 20 phr, relative to the weight sum of the (meth)acrylic monomer and/or of the (meth)acrylic polymer, of a mineral filler.

The mineral filler may notably be chosen from the group consisting of quartz, granite, marble, feldspar, clay, glass, ceramics, mica, graphite, silicates, carbonates, carbides, sulfates, silicates, hydroxides, metal oxides, metals, aluminum trihydrate Al(OH)3, and mixtures thereof.

Preferably, the mineral filler is in powder form.

Preferably, the (meth)acrylic composition according to the invention comprises less than 20 parts by weight of mineral filler, preferably less than 15, more preferentially less than 10, more preferentially less than 5, more preferentially less than 1 part by weight of mineral filler relative to the weight sum of the (meth)acrylic monomer and/or of the (meth)acrylic polymer of a mineral filler.

According to one embodiment of the invention, the composition does not comprise any mineral filler. This allows the production of transparent resins.

### Reinforcing fibers

The composition according to the present invention may also comprise fibers.

For the purposes of the present invention, the fibers are not included in the definition of the mineral fillers defined above.

The fibers may be natural or synthetic. The fibers may be short or long.

Natural materials that may be mentioned include plant fibers, wood fibers, animal fibers or mineral fibers.

Natural fibers are, for example, sisal, jute, hemp, flax, cotton, coconut fibers, and banana fibers. Animal fibers are, for example, wool or fur.

Synthetic materials that may be mentioned include polymeric fibers chosen from fibers of thermosetting polymers, of thermoplastic polymers or mixtures thereof.

The polymeric fibers may consist of polyamide (aliphatic or aromatic), polyester, polyvinyl alcohol, polyolefins, polyurethanes, polyvinyl chloride, polyethylene, unsaturated polyesters, epoxy resins and vinyl esters.

The mineral fibers may also be chosen from glass fibers, in particular of type E, R or S2, carbon fibers, boron fibers or silica fibers.

Preferably, for the purposes of the present invention, the term "fibers" means a plurality of fibers, unidirectional rovings or a continuous filament mat, fabrics, felts or nonwovens which may be in the form of strips, webs, braids, strands or parts.

Preferably, the fibers have a length to diameter ratio of at least 1000, preferably at least 1500, more preferably at least 2000, advantageously at least 3000, more advantageously at least 5000, even more advantageously at least 6000, even more advantageously at least 7500 and most preferably at least 10 000.

Preferably, the (meth)acrylic composition according to the invention comprises less than 300 parts by weight of fibers, preferably less than 100, more preferentially less than 20, preferably less than 15, more preferentially less than 10, more preferentially less than 5, more preferentially less than 1 part by weight of mineral filler relative to the weight sum of the (meth)acrylic monomer and/or of the (meth)acrylic polymer.

According to one embodiment of the invention, the composition does not comprise any fibers. This allows the production of transparent resins.

### Additives for controlling the exothermicity

The composition according to the present invention may comprise at least one additive for controlling the polymerization exothermicity, chosen from the group consisting of saturated short-chain aliphatic esters, short-chain glycols and diols, primary and secondary amines and mixtures thereof. These compounds make it possible to increase the heat dissipation, and thus to reduce the maximum polymerization exothermicity, reducing the amount of methyl methacrylate (MMA) monomer which boils and entrains air voids.

Preferably, said additive represents less than 6% by weight, preferably less than 5% by weight and preferably between 0.6% and 4% by weight relative to the weight of (meth)acrylic monomer and of the optional (meth)acrylic polymer. Such contents avoid having an impact on the reaction kinetics or the molecular weight. These compounds are particularly desirable on account of their low cost, their low toxicity and their minimal environmental impact. Furthermore, they are chemically inert under the polymerization conditions, which means that there is little or no effect on the curing time or the molecular weight of the product obtained.

Preferably, the saturated short-chain aliphatic esters are chosen from those containing C6-20 and preferably C8-12 carbon chains. It has been found that the heat dissipation effect reduces as the molecular size increases.

The saturated short-chain aliphatic esters that are useful comprise, for example, methyl heptanoate and methyl laurate.

The term "short-chain diol" means diols containing carbon chains of 2 to 6 and preferably of 3 or 4 carbons. Diols that may be mentioned include 1,3-butanediol and 1,4-butanediol. Glycols that may be mentioned include glycerol, 1,2-propylene glycol and 1,3-propylene glycol, diethylene glycol and Triton X-100 (C14H22O(C2H4O)n) from Dow Chemical.

Preferably, the primary amines are chosen from primary amines containing linear and branched C4 to C20 aliphatic alkyl groups and aromatic primary amines.

Preferably, the aromatic primary amines are chosen from the group consisting of aniline and o-, m- and p-toluidines.

Preferably, the primary hydroxylamines are chosen from the group consisting of ethanolamine and 3-amino-1-propanol.

Preferably, the secondary amines are chosen from the group consisting of secondary diamines containing linear and branched C4 to C20 aliphatic alkyl groups and aromatic diamine amines.

### Preparation of the polymerizable composition

The present invention also relates to a process for preparing the polymerizable composition as defined above, comprising the following steps:
i) optionally preparing a mixture of (meth)acrylic polymer and/or of (meth)acrylic monomer
ii) mixing the first organic peroxide as defined above, of the second organic peroxide as defined above and optionally the third organic peroxide as defined above, with a mixture of (meth)acrylic polymer and/or of (meth)acrylic monomer.

Preferably, when a (meth)acrylic polymer is present, it is added to the (meth)acrylic monomers and dissolved.

In step ii) the first, the second organic, and optionally the third peroxides can be added together or separately.

Preferably, step ii) is a step of mixing the organic peroxide composition as defined above with a mixture of (meth)acrylic polymer and/or of (meth)acrylic monomer.

Preferably, 1 to 10 phr, preferably 1 to 5 phr, relative to the weight sum of the (meth)acrylic monomer and of the (meth)acrylic polymer, of the organic peroxide composition as defined above is added in step ii).

Preferably, step ii) is performed at a temperature of less than 50°C, more preferably less than 40°C, advantageously less than 30°C and more advantageously less than 25°C.

### Use

The present invention also relates to the use of the composition as defined above for the polymerization of a composition comprising at least one (meth)acrylic monomer and optionally at least one (meth)acrylic polymer, in particular an optional at least one (meth)acrylic copolymer as defined above.

The present invention also relates to the use of the polymerizable composition as defined above or prepared via the process as defined above, for manufacturing resins, in particular thermoplastic, thermoset or composite parts.

### Process

The present invention also relates to polymerization process comprising a step of polymerizing the polymerizable composition as defined above.

Preferably, the polymerization step is performed at a temperature ranging from 45°C to 130°C, preferably from 90°C to 130°C, even more preferably from 100°C to 120°C, e,g,50, 60, 70, 80, 90, 100, 110, 120, 130°C.

The present invention also relates to a process for manufacturing thermoplastic, thermoset or composite parts, comprising the following steps:
i) optionally, a step of preparing a polymerizable composition as defined above,
ii) optionally, placing the composition as defined above in a mold,
iii) polymerization of said composition.

Said process may be chosen in particular from the group consisting of vacuum-assisted resin infusion (VARI), extrusion by drawing, molding by casting (by gravity or by low-pressure injection), vacuum bag molding, pressure bag molding, autoclave molding, resin transfer molding (RTM) and variants thereof (HP-RTM, C-RTM, I-RTM), reaction-injection molding (RIM), reinforced reaction-injection molding (R-RIM) and variants thereof, press molding, compression molding, liquid compression molding (LCM) or sheet molding compound (SMC) molding or bulk molding compound (BMC) molding.

The mold may in particular be a closed mold or a bath.

The manufacturing process according to the invention may also comprise a postforming step iv). Preferably, this postforming step iv) is performed after the polymerization step iii). The term "postforming" means the bending and also the changing of the shape of the composite part.

The manufacturing process according to the invention may also comprise a step v) of welding, bonding or laminating.

In a particular embodiment, the process according to the invention may comprise a step of impregnating the fibrous substrate in a mold with the composition as defined above. Preferably, the impregnation step is performed during step ii) of placing the composition in a mold.

If the viscosity of the composition of the present invention at a given temperature is slightly too high for the impregnation step, it is possible to heat the composition slightly so as to obtain a more liquid composition for sufficient wetting and correct and complete impregnation of the fibrous substrate.

For the purposes of the present invention, the term "fibrous substrate" means a plurality of fibers, unidirectional rovings or a continuous filament mat, fabrics, felts or nonwovens which may be in the form of strips, webs, braids, strands or parts.

Preferably, the polymerization step is performed at a temperature of between 50°C and 140°C, preferably between 50°C and 130°C, preferably at a temperature of between 70°C and 120°C, preferably at a temperature of between 90°C and 110°C.

### Article

The invention also relates to an article obtainable by process as defined above.

Said article may be thermoplastic, thermoset or composite, preferably thermoplastic.

The article may be postformed after the polymerization of the composition of the invention.

The article may be welded, bonded or laminated.

Preferably, the article is chosen from the group consisting of: a motor vehicle part, a boat part, a bus part, a train part, a sports article, a plane or helicopter part, a space ship or rocket part, a photovoltaic module part, a material for construction or building, for example composite armatures, dowels and callipers for civil engineering and high-rise construction, a wind turbine part, for example a girder spar cap of a wind turbine blade, a furniture part, a construction or building part, a telephone or cellphone part, a computer or television part, or a printer or photocopier part.

The examples below are given as illustrations of the present invention.

### EXAMPLES

The following initiators were prepared by mixing the organic peroxides mentioned in table 1:

**[Table 1]**

| Examples | Initiator Composition (ratios in weight %) |
|---|---|
| Composition 1 | tert-butylperoxyneodecanoate with Isopar 75/25 (Luperox^{®} 10M75, 1h HLT: 66) / tert-amylperoxy-2-ethylhexanoate (Luperox^{®} 575, 1h HLT: 92) in a weight ratio of pure organic peroxides of 43/57 |
| Composition 2 | tert-butylperoxyneodecanoate with Isopar 75/25 (Luperox^{®} 10M75/tert-amylperoxy-2-ethylhexanoate (Luperox^{®} 575) / OO-tert-butyl-O-(2-ethylhexyl)-monoperoxycarbonate (Luperox^{®} TBEC, 1h HLT: 121) in a weight ratio of pure organic peroxides of 43/28.5/28.5 |
| Composition 3 | tert-butylperoxyneodecanoate with Isopar 75/25 (Luperox^{®} 10M75)/ tert-butylperoxy-2-ethylhexanoate (Luperox 26^{®}, 1h HLT: 95)/ 1,1-di(tert-butylperoxy)-cyclohexane (Luperox^{®} 33 1M70P, 1h HLT: 116) in a weight ratio of pure organic peroxides of 47/31/22 |
| Comparative example 1 | Di(4-tert-butylcyclohexyl) peroxydicarbonate (Perkadox^{®}16)/ dilauroyl peroxide (Luperox^{®} LP)/dibenzoyl peroxyde (Perkadox^{®} CH-50X) CH50X |
| Comparative example 2 | tert-amylperoxy-2-ethylhexanoate (Luperox^{®} 575) |
| Comparative example 3 | 20% wt tert-butyl peroxybenzoate and 80% wt of methyl isobutyl ketone peroxide (Luperox^{®} Q2) |

### Curing reactivity evaluation by using DSC method

### Preparation of the DSC sample:

2 g of the compositions mentioned in Table 1 are added to 100 g of liquid composition comprising PMMA and MMA (Elium^{®} C595E), and the mixture is stirred for 1 minute. Resin samples was studied by DSC. The experimental conditions were:
Equipment: TA Q2000 with the test mode: Nitrogen
1: Equilibrate at 90.00°C
2: Isothermal for 120.00 min
3: End of method

### Evaluation of the residual monomer:

2 g of the compositions mentioned in Table 1 are added to 100 g of this liquid composition comprising PMMA and MMA (Elium^{®} C595E), and the whole is stirred for 1 minute. 10 g of the sample was placed in a glass container and cured in an oven at 90 degrees for 10 minutes. Then 0.5 g of the cured sample is dissolved in CHCl3 and precipitated in EtOH solution. After mixing and settling, the liquid phase components were collected, filtered through a 0.2 µm PTFE filter and injected into a gas chromatograph.

### Equipment information of GC-FID gas chromatograph

Agilent 7890B
- GC parameters:
   - Column: DB-624
   - Injection port temperature: 250°C
   - Detector temperature: 280°C
   - Injection mode: Split
   - Oven temperature program: Start at 80 °C, hold for 1 min,
   - Ramp 10 °C /min to 230 °C, hold for 15 min
   - Ramp 20 °C /min to 250 °C, hold for 5 min

### Results

The results are given in table 2 below:

**[Table 2]**

| **Composition** | **curing peak (minutes)^{[1[}** | **residual monomer %^{[2]}** |
|---|---|---|
| Composition 1 | 2.4 | 1.93 |
| Composition 2 | 2.5 | 1.13 |
| Composition 3 | 2.6 | 1.41 |
| Comparative composition 1 | 2.1 | 3.27 |
| Comparative composition 2 | 5.5 | 5.45 |
| Comparative composition 3 | 56.9 | 2.57 |
| [1] DSC method | | |
| [2] residual monomer after curing at 90°C for 10 min | | |

The results from Table 2 show that the composition of the present invention permits to have a fast polymerization time (curing peak) with a low residual monomer content as compared to the comparative compositions 1 to 3.

## Claims

1. Composition comprising:
- from more than 40% to 80% by weight relative to the total weight of organic peroxides, of a first organic peroxide having a onehour half-life temperature comprised between 50°C and less than 80°C, more preferably comprised between 54°C and 77°C and even more preferably comprised between 60°C and 70°C, the first organic peroxide being a peroxyester according to formula (I): 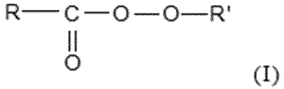 wherein R and R' are the same or different and are selected from a linear or branched C₄-C₂₀ alkyl radical; and
- a second organic peroxide having a one-hour half-life temperature comprised between 80°C and less 110°C, preferably comprised between 85°C and 105°C, more preferably comprised between 88°C and 100°C and even more preferably comprised between 90°C and 95°C.

2. Composition according to claim 1, wherein R represents a branched C₄-C₁₀ alkyl radical, preferably C₇-C₉ alkyl radical and R' represents a branched C₄-C₉ alkyl radical, preferably C₄-C₅ alkyl radical.

3. Composition according to any one of the preceding claims, wherein the first organic peroxide is selected from the group consisting of 1,1,3,3-tetramethylbutylperoxyneodecanoate, tert-amylperoxyneodecanoate, tert-butylperoxyneodecanoate, 1,1,3,3-tetramethylbutylperoxypivalate, tert-butylperoxyneoheptanoate, tert-amylperoxypivalate, tert-butylperoxypivalate, α-cumyl peroxyneodecanoate, di-2-ethylhexyl peroxydicarbonate, diisopropyl peroxydicarbonate and mixtures thereof, preferably the first organic peroxide is at least one tert-butylperoxyneodecanoate.

4. Composition according to any one of the preceding claims, wherein the first organic peroxide is present in an amount ranging from from 41 to 60% by weight, more preferably from 42 to 55% by weight relative to the total weight of organic peroxides.

5. Composition according to any one of the preceding claims, wherein the second organic peroxide having a one-hour half-life temperature comprised between 85°C and less than 110°C is a peroxyester, preferably a peroxyester according to formula (II): 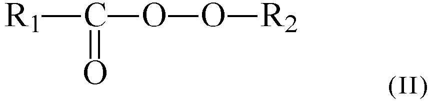 wherein R₁ and R₂ are the same or different and are selected from a linear or branched C₄-C₂₀ alkyl radical, preferably, wherein R₁ represents a branched C₄-C₁₀ alkyl radical, preferably C₆-C₈ alkyl radical and R₂ represents a branched C₄-C₉ alkyl radical, preferably a branched C₄-C₅ alkyl radical, even preferably a branched C₅ alkyl radical.

6. Composition according to any one of the preceding claims, wherein the second organic peroxide is selected from the group consisting of 1,1,3,3-tetramethylbutylperoxy-2-ethylhexanoate, tert-amylperoxy-2-ethylhexanoate, tert-butylperoxy-2-ethylhexanoate, tert-butylperoxydiethylacetate, tert-butylperoxyisobutyrate, tert-amylperoxy -3,5,5-trimethylhexanoate and mixtures thereof, preferably is selected in the group consisting of tert-amyl peroxy-2-ethylhexanoate, tert-butyl peroxy-2-ethylhexanoate and mixtures thereof, more preferably is at least one tert-amyl peroxy-2-ethylhexanoate.

7. Composition according to any one of the preceding claims, comprising a third organic peroxide having a one-hour half-life temperature comprised between 110°C and 135°C, preferably comprised between 111°C and 125°C.

8. Composition according to any one of the preceding claims, wherein the second organic peroxide, or the total of the second and third organic peroxides when a third organic peroxide is present, represents from 20 to less than 60% by weight, preferably from 40 to 59% by weight, even more preferably from 45% to 58% by weight relative to the total weight of organic peroxides.

9. Composition according to claims 7 or 8, wherein the weight ratio between the second organic peroxide and the third organic peroxide ranges from 1:2 to 2:1, preferably from 3:4 to 3:2.

10. Composition according to any of claims 7 to 9, wherein the third organic peroxide is selected from the group consisting of: monoperoxycarbonates and peroxyketals, preferably from the group consisting of: OO-tert-butyl-O-(2-ethylhexyl)-monoperoxycarbonate, OO-tert-amyl-O-(2-ethylhexyl)-monoperoxycarbonate, 1,1-di(tert-butylperoxy)-3,3,5-trimethylcyclohexane, 1,1-di(tert-butylperoxy)-cyclohexane, 1,1-di(tert-amyl peroxy)-cyclohexane, and mixtures thereof.

11. Composition according to any one of the preceding claims, comprising:
- from more than 40% to 80% by weight, preferably 41% to 60% by weight, more preferably 42% to 55% by weight relative to the total weight of organic peroxides, of the first organic peroxide as defined in any of the previous claims;
- from 10% to less than 40% by weight, preferably from 15% to 38% by weight, more preferably from 20% to 35% by weight relative to the total weight of organic peroxides, of the second organic peroxide as defined in any of the previous claims; and
- 10% to 40% by weight, preferably from 15% to 38% by weight, more preferably from 20% to 35% by weight relative to the total weight of organic peroxides, of the third organic peroxides as defined in any of the previous claims.

12. Polymerizable composition comprising a composition as defined according to any of the previous claims, at least one (meth)acrylic monomer, and optionally at least one (meth)acrylic polymer.

13. Polymerizable composition according to claim 12, wherein the at least one (meth)acrylic monomer is chosen from the group consisting of methyl methacrylate, ethyl methacrylate, methyl acrylate, ethyl acrylate, methacrylic acid, acrylic acid, n-butyl acrylate, isobutyl acrylate, n-butyl methacrylate, isobutyl methacrylate, cyclohexyl acrylate, cyclohexyl methacrylate, isobornyl acrylate, isobornyl methacrylate, hydroxyethyl acrylate and hydroxyethyl methacrylate, and mixtures thereof.

14. Polymerization process comprising a step of polymerizing the polymerizable composition as defined in claim 12 or 13.

15. Use of a composition according to any of claims 1 to 11 for the polymerization of a composition comprising at least one (meth)acrylic monomer and optionally at least one (meth)acrylic polymer.

16. Article obtainable by the process as defined in claim 14.
